# EUROPEAN PATENT APPLICATION

(11) **EP 1 367 754 A2**
(43) Date of publication of application: **03.12.2003**
(21) Application number: 03010765.0
(22) Date of filing: 14.05.2003
(51) Int. Cl.: H04J 14/02, H04Q 11/00

(54) **WDM metropolitan access network architecture based on hybrid switching**

(30) Priority: 31.05.2002 US 160467
(71) Applicant: ALCATEL, 75008 Paris (FR)
(72) Inventor: El-Bawab, Tarek, Richardson, TX 75080 (US)
(74) Representative: Dreiss, Fuhlendorf, Steimle & Becker

(57) **Abstract**

An optical network node (50) receives information over a plurality of channels (42) on respective wavelengths from an input optical fiber. The node (50) includes mux/demux circuitry (60) for separating the optical signal into a set of circuit-switched channels (48) and a set of burst-switched channels (46). Circuit-switching (wavelength-switching) circuitry (68) switches information in the circuit-switched channels and burst-switching circuitry (62) routes information in the burst-switched channels. The mux/demux circuitry (60) combines information from the first and second sets of channels onto an output optical fiber, such that the fiber carries both circuit-switched and burst-switched information. A common control platform manages the communications for both types of traffic.

## Description

### Background of the Invention

### TECHNICAL FIELD

This invention relates in general to telecommunications systems and, more particularly, to wavelength division multiplexed networks and optical burst switching.

### DESCRIPTION OF THE RELATED ART

Over the last decade, the amount of information that is conveyed electronically has increased dramatically. As the need for greater communications bandwidth increases, the importance of efficient use of communications infrastructure increases as well. Wavelength division multiplexing (WDM) and multi-wavelength optical networking have become key technologies for emerging and future public networks. WDM is now well established as a principal technology to enable large transport capacities in long-haul communications.

Interest in deploying multi-wavelength optical networking has been shifting towards metropolitan networks (regional metro and access metro) during recent years. Numerous optical networking solutions are being investigated today for the access loop (FTTC [fiber to the curb], FTTH [fiber to the house], PON [passive optical network], APON [ATM based passive optical network], EPON [Ethernet based passive optical networks], etc.) and for regional/core metro (OADM's and OXC's). The goal is to introduce multi-wavelength networking into these arenas. The challenges that access and metro WDM networks face, however, are different than those encountered by WDM in long-haul communications. On one hand, existing long-haul WDM systems are designed to overcome impairments associated with longer fiber transmission paths and thereby carry additional cost margin that is wasteful in access and metro networks. On the other hand, the architectural challenges in access and metro are fundamentally different than those in long-haul.

Today, service providers in the metro and access areas face a situation where demand for greater bandwidths is recognized. This demand, however, is chaotic and is based on unpredictable mixtures of services and customers (data, voice and/or video over numerous technologies - DSL, fast Ethernet, Gigabit Ethernet, CATV, ATM, Frame Relay and SONET). In principle, the demand for more bandwidth can only be met by WDM. However, the uncertainty in the relative mix of broadband applications and services dictates that the WDM system of choice by exceptionally flexible and capable of handling numerous protocols, bit rates and signal formats efficiently. Solutions that are based on wavelength-to-traffic-type or wavelength-to-service dedication have been considered, but the large number of wavelengths desired in these solutions and the cost-effectiveness of the solutions became difficult to verify on the metro level and even more difficult to verify on the access level.

Solutions based on wavelength routing (circuit-switching) of a limited pool of wavelengths, on the other hand, don't make efficient use of the transmission medium when data traffic dominates the public network. This is the case today where the increasing demand for bandwidth is largely due to a spectacular growth in IP data traffic. All-optical packet switching would be an optimum transfer mode to handle the flood of optical IP packets to and from the Internet core in the most efficient way. However, a number of packet-switching operations (e.g. ultra fast pulsing, bit and packet synchronization, ultra-high-speed switching, buffering and header processing) cannot be performed optically, on a packet-by-packet basis today.

A number of old and new transfer modes have been investigated. Burst Switching (BS) and Fast-Circuit Switching (FCS) are examples and the former seems to be getting increasing attention. Most of the studies however look at burst switching in the core network where it is too expensive, and difficult, to admit it into the network and to interface it with IP, ATM and SONET, all together, in an efficient manner. A number of studies also consider optical burst switching in the core. This is even more difficult to implement. Meanwhile, the fact that the access network delivers services such as plain telephony and cable TV to the end customer, and will very likely keep doing so for an extended period of time, means that despite domination of data traffic, room should be left for traditional connection oriented services.

Many types of information may be communicated over a WDM network, each with its own needs. Voice and audio data, for example, require a relatively small bandwidth; on the other hand, interruptions in voice and real-time audio data are very disturbing to the participants. Non-real-time data transfers, such Internet browsing and other data communications, may require a large bandwidth, but interruptions in the data flow may not be discernable to the users. A high-resolution video transfer may require both a high bandwidth and interruption-free transmission.

Accordingly, a need exists for a flexible WDM system, capable of handling numerous protocols, bit rates, and signal formats efficiently. Future WDM metro/access systems must handle both packetized traffic and circuit-type traffic efficiently.

### Brief Summary of the Invention

In the present invention, an optical network node receives information over a plurality of channels on respective wavelengths from an input optical fiber. The node includes separating circuitry for separating the optical signal into a first set of channels and a second set of channels. Circuit-switching circuitry switches information in the first set of channels and burst-switching circuitry routes information in the second set of channels. Switching granularity in the circuit-switched part of the network is the wavelength whereas the granularity in the burst-switched part is the data burst. Control circuitry manages communications over the circuit-switching circuitry and the burst switching circuitry. Combining circuitry combines information from the first and second sets of channels onto an output optical fiber.

The present invention provides significant advantages over the prior art. The nodes combine the qualities of circuit-switching (wavelength switching) and burst-switching, allowing the most efficient switching method to be used for a given transfer. The architecture permits the treatment of circuits and bursts separately, each in a sub-network that is optimized for carrying its designated type of traffic (bursts or wavelength circuits). A common control platform is designated to control traffic over both burst and circuit sub-networks. A common control platform manages the communications for both types of traffic. Additionally, the invention provides an entry strategy for burst-switching as a new switching technique. While current studies envision burst-switching in the core network, where it is actually difficult to introduce (due to interface with numerous core protocols and systems including IP, ATM and SONET plus ultra-high cost to do so), the introduction of burst-switching at the access level can improve the performance of the public network at this level (higher efficiency and relief of bottlenecks) and, meanwhile, can get around some complex interfacing requirements in the core. At the metropolitan/regional network, bursts may be mapped into SONET circuits and merge smoothly with the main stream up to the core where extra bandwidth is available today and advanced traffic management is introduced via the advents of OADM's (optical add/drop multiplexer) and OXC's (optical cross-connects).

### Brief Description of the Several Views of the Drawings

For a more complete understanding of the present invention, and the advantages thereof, reference is now made to the following descriptions taken in conjunction with the accompanying drawings, in which:
Figure 1 illustrates a block diagram of an existing metropolitan network;
Figure 2 illustrates an existing wavelength division multiplexing technique;
Figure 3 illustrates a block diagram of an optical network based on hybrid switching (optical burst and wavelength switching);
Figure 4 illustrates an allocation of channels in the network of Figure 3;
Figure 5 illustrates burst-switching;
Figure 6 illustrates a block diagram of a node in the network of Figure 3;
Figure 7 illustrates wavelength slicing/interleaving used in the node of Figure 6;
Figure 8 illustrates an example of a typical scenario of burst(s) transmission and establishment of a circuit connection between various nodes including the signaling needed thereto;
Figure 9 illustrates a structure for a notification packet; and
Figures 10A through 10C illustrates a flow chart describing a method of common control and MAC (medium access control) protocol for the proposed architecture.

### Detailed Description of the Invention

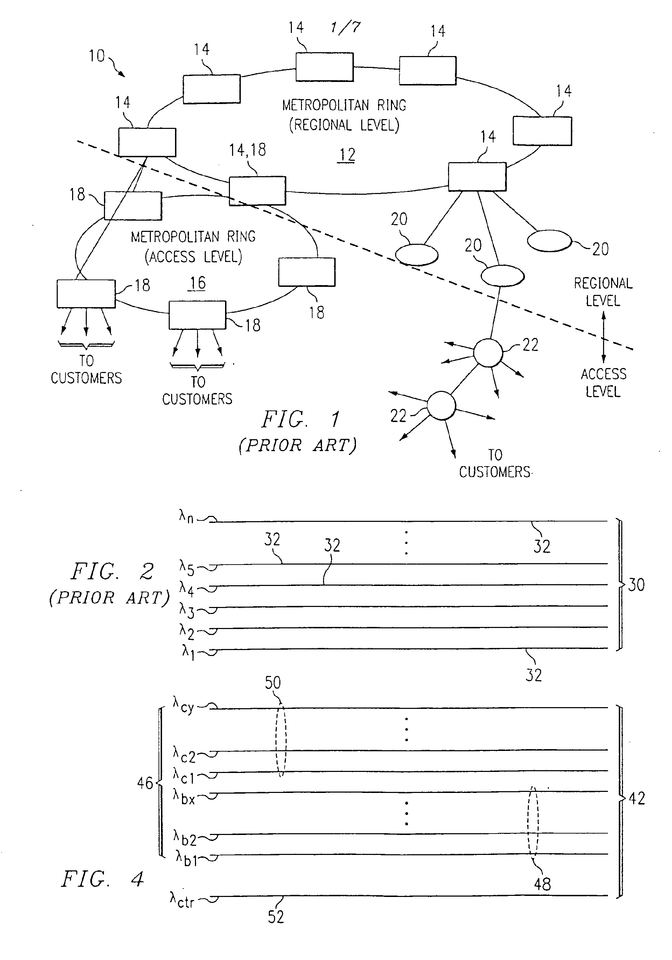

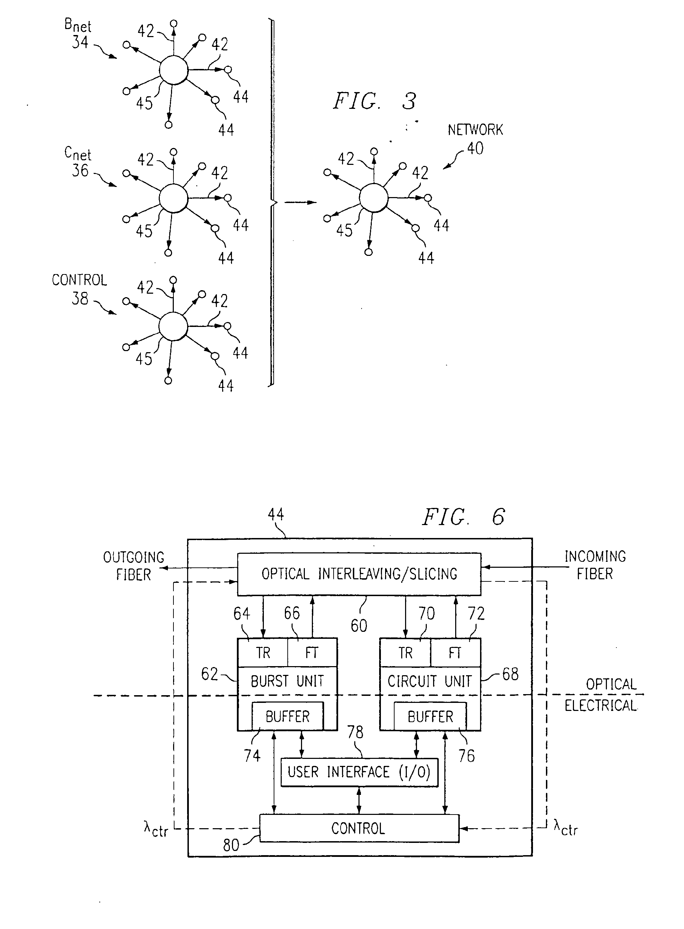

The present invention is best understood in relation to Figures 1 - 10 of the drawings, like numerals being used for like elements of the various drawings.

Metropolitan networks, such as the one shown in Figure 1, occupy the intermediate geographical area linking, in most cases, long-haul systems to local, enterprise and access networks. In many cases however, metropolitan networks are regarded as encompassing enterprise, the access loop, and the entire customer premises. Depending on the exact situation of a segment in the public network, one or two metropolitan levels may exist. There is no standard classification and, indeed, terminologies other than the one depicted in the figure are possible. Figure 1 illustrates a generalized block diagram of a metropolitan network 10. A regional level metropolitan ring 12 comprises a number of regional level central offices 14 interconnected in a ring structure. Regional level central offices 14 may be connected to an access level metropolitan network 16 comprising access level central offices 18 in a ring structure (some central offices may be part of both a regional level and an access level network). Regional level central offices 14 may also be connected to regional level distribution points 20. Regional level distribution points are coupled to access level distribution points 22. Access level distribution points 22 are coupled to customers and to other access level distribution points in a star configuration.

In order to satisfy the need for additional bandwidth, there is a strong desire to deploy WDM in the access network. Figure 2 illustrates an example of a division of channels in a WDM system. Information is carried over an optical fiber 30 over a plurality of discrete and discernable wavelengths. Each wavelength may be referred to as a "channel". In Figure 2, there are n channels 32 (λ1 - λn) for carrying communications traffic and control.

WDM can dramatically increase the amount of bandwidth conveyed over a fiber 30, especially as the number of discernable wavelengths that can be used in connection with WDM has shown steady increase over the last few years. However, success in applying WDM to metropolitan networks has been very limited. On one hand, there is a need for exceptional flexibility to accommodate different types of information that will be carried by the network, since the mixture of services and customers (data, voice and/or video over numerous technologies, e.g. DSL, fast Ethernet, Gigabit Ethernet, CATV, ATM, Frame Relay and SONET) changes rapidly in an unpredictable fashion. On the other hand, cost effectiveness is the crux of the challenge facing access and metro WDM. Clearly, all solutions proposed today in the industry have not met this challenge successfully.

In the present invention, shown diagrammatically in Figure 3, two separate networks, Bnet (a burst-switching network) 34 and Cnet (a circuit-switching, or wavelength-switched, network) 36 along with control signaling 38 form a network 40 over the common fibers 42 and nodes 44. A passive star coupler 45, which splits the power of an input signal among all outputs, resides at the center of the network 40. The network 40 would typically reside in the last mile of the public network, where optical passive-star-coupler based topologies are favored against their ring counterparts. The architecture for network 40 is a "broadcast and select one." Every node 44 in the network can take the form of any type of telecommunication termination (residential, business or a central access point where a number of residential/business traffic streams are aggregated).

As shown in Figure 4, using WDM, the data channels 46 include two distinct sets; the burst-switching network uses a set 48 of x channels, λ_{b1} through λ_{bx}, and the circuit-switching network use a set 50 of y channels, λ_{c1} through λ_{cy}. A dedicated control channel 52, λ_{ctr}, implements a MAC protocol, in the preferred embodiment, and secures coordination and communication among nodes. In the preferred embodiment, the control scheme is token-passing based, i.e. a token is passed among nodes in certain order and the node that capture the token gets the permission to start transmitting bursts of data and/or the permission to establish a new connection.

While Figure 4 shows each set of channels 48 and 50 using a contiguous group of channels, any group of channels, contiguous or non-contiguous, could be used in each set. Further, the number of control channels could vary based on the implementation.

In a circuit-switched connection with a node 44, one of the channels in set 50 is dedicated to the connection. The communication session that established the connection has sole occupancy of the channel for the duration of the session. Hence, information can be passed over the channel, up to the bandwidth limitation of the channel, for the entirety of the communication session. If the transmission of information is less than the bandwidth of the channel, then the extra capacity is unused. A circuit-switched connection is particularly useful for high-bandwidth, high quality of service applications, such as real-time video and for communication sessions where data interruption is unacceptable, such as voice communications. On the other hand, for applications such as Internet browsing, where there are large time periods of unused bandwidth, circuit-switching is an inefficient use of the resource.

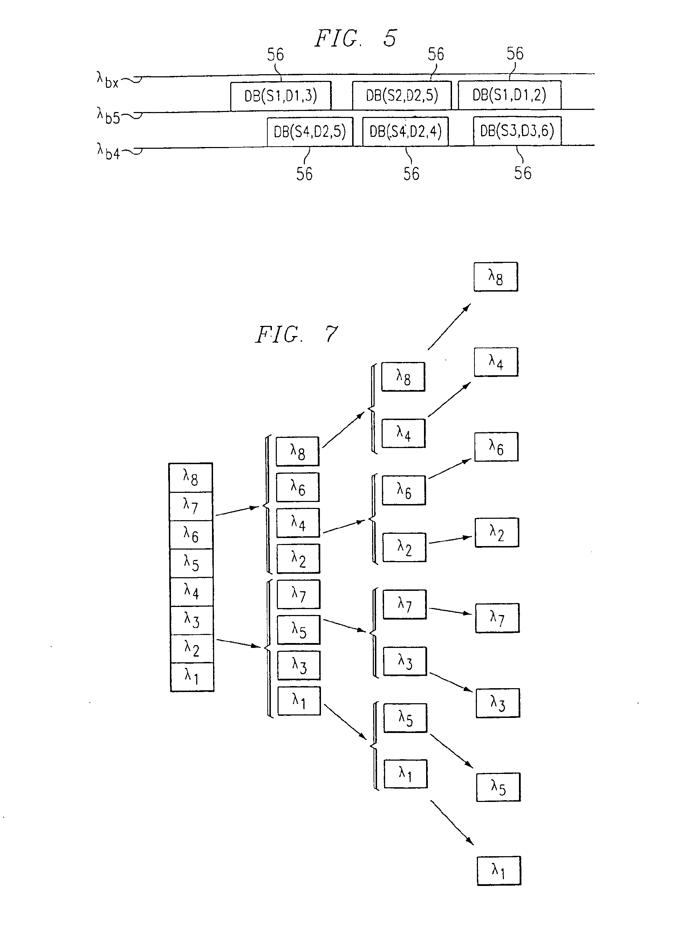

In a burst-switched communication session, data that is originally packetized are aggregated into larger data units identified as "data bursts" 56, as illustrated in Figure 5. For illustration, data bursts 56 are illustrated in Figure 5 as DB(source, destination, burst ID). The aggregation process of smaller data packets into larger DBs can be based on common destination nodes and quality-of-service measures. Criteria for burst assembly can be based on maximum and minimum burst sizes and burst lifetime.

Accordingly, burst-switching provides an extremely efficient use of the available resources. However, if there is unexpectedly high traffic, bursts can be delayed, or dropped, causing interruptions. Hence, burst-switching is highly desirable for non-real-time data transfer and web browsing, where interruptions are not obvious to the user. On the other hand, burst-switching may be a poor choice for high bandwidth real-time video, where interruptions may result in drop-outs and stuttering.

As discussed above, the present invention allows the use of both circuit-switching (wavelength switching) and burst-switching, so that the most desirable method can be used for a given communication session.

Figure 6 illustrates a block diagram of a node 44. An optical interleaving/slicing circuit 60 is coupled to the incoming and outgoing fibers. A burst unit 62 is coupled to the interleaving/slicing circuit 60 via a tunable receiver (TR) 64 and a fixed transmitters (FT) 66. Similarly, a circuit unit 68 is coupled to the interleaving/slicing circuit 60 via a tunable receiver 70 and a fixed transmitter 72. Burst unit 62 includes a buffer 74 and circuit unit 68 includes a buffer 76. A user interface 78 is coupled to the burst unit 62 and circuit unit 68. Control circuitry 80 is coupled to the burst unit 62, circuit unit 68 and user interface 78. Control circuitry 80 also receives the incoming and outgoing control channel λctr.

In operation, in the preferred embodiment, each node 44 is allowed to handle a circuit-switched connection, a burst-switched communication session, or, at most, both a circuit-switched connection and a burst-switched communication session at one time (in a single token cycle). The burst unit 62 transmits bursts using the fixed-wavelength transmitter 66 over a predetermined channel and receives bursts using the tunable receiver over a desired (variable) channel. Similarly, The circuit unit 68 transmits information using the fixed-wavelength transmitter 70 over a predetermined channel and receives information the tunable receiver over a desired (variable) channel. The tunable receivers 64 and 70 are capable of receiving data on any of the channels in their respective sets 48 and 50. Hence, for a network of *N* nodes, the total number of channels in set 48 (*x* channels) necessary is less than or equal to 2*N*. For *x*<2*N*, the channels could be assigned to successive nodes (ordered according to token path) in a cyclic fashion, so as none of the x Bnet channels is reused in the transmission medium before all the others are used. This cycling avoids interference/collision of bursts transmitted by two or more nodes over the same channel. The number and length of bursts to be launched per node per token cycle would need to be synchronized with this channel assignment sequence. In many applications, *x* can be as low as *N*/2, or even lower, depending on the particular design and load of the network. For purposes of illustration, however, it will be assumed that the number of channels is equal to 2*N*, for ease of explanation.

In the node 44, switching is carried out optically with semiconductor optical amplifiers (SOAs) and Lithium Niobate technologies being prime candidates for the burst switched unit and MEMS (Micro-Electro-Mechanical Systems) being the prime candidate for the circuit (wavelength) switched unit. On the other hand, buffering and control are done electronically. This is the preferred embodiment and other technologies could be used as well. The input WDM channels are passed through an interleaving/slicing multiplexing/demultiplexing unit, described in greater detail below. The channels of the incoming fiber are demultiplexed in to the wavelength components and directed towards the associated burst unit 64 or circuit unit 68, depending upon the assigned set associated with the channel.

Traffic generated or aggregated at the node 44 is buffered in buffers 74 and 76 and addressed prior to modulation through respective transmitter 66 or 72. Queuing in the buffer can be done using a first-in, first-out scheme or a priority-based scheme.

The demultiplexing/multiplexing of data on the incoming and outgoing fibers can be performed using an optical interleaving/slicing circuit 60. In many traditional WDM systems, where a multiplexing/demultiplexing circuit is implemented using technologies such as thin-film filters, arrayed waveguides or fiber Bragg gratings, the maximum channel capacity of the multiple channel system is put into the network at the start, even if some channels are not commissioned immediately. This, of course, can lead to high startup costs. Moreover, performance penalties, e.g. insertion loss, increase when modular products are added at a later date to enhance flexibility. In 4- or 8-channel long-haul systems, this situation is sometimes acceptable. However, it would be extremely wasteful large-channel-count long-haul system and in a metro/access network.

One way to overcome flexibility and cost problems is through the use of optical slicing/interleaving, as shown in Figure 7. Optical slicing (sometimes referred to as optical deinterleaving) is the separation of a set of periodically spaced wavelengths into two complementary sets at twice the original spacing. The inverse technique, optical interleaving is combining two appropriately spaced sets of wavelengths into a single equally spaced set.

As shown in Figure 7, each slicing step increases the wavelength difference between adjacent channels. At each stage of channel separation, downstream complexity is halved. Accordingly, the slicer/interleaver 60 can use inexpensive WDM filters that are designed for operation at wide channel spacing to be extended to system designs with narrow channel spacing in the range of 50 GHz or less.

In the network architecture shown in Figure 6, the slicer/interleaver can also combine the two sets of channels 48 and 50 into one densely packed set of wavelengths to inject onto the outgoing fiber.

The slicer/interleaver can be implemented with a fused fiber Mach-Zender interferometer. Essentially, two similar fiber claddings are fused together in a carefully controlled manner. Within the fused region, light from an input port is split with between two outputs in a ratio determined by the geometry of the fusion. Because of the changing geometry of the "down-taper" side of the fused region, energy from the core modes of the input fiber is transferred to the cladding modes that are common to all the fibers present. In the "up-taper" region, these modes are converted back into core modes. If the slopes within the fused region are gradual and discontinuities are not present, losses in converting from core to cladding modes, and vice versa, are fairly small. The composite device thus has low insertion loss and is highly directional. When two of these fused-fiber couplers are combined in series, the assembly becomes a slicer with the properties of a Mach-Zehnder interferometer. It directs input power to either of its output ports depending on wavelength. Fused-fiber Mach-Zehnder interferometer technology has been known in the art for years, but its deployment was restricted by instability in performance against temperature variations. Recent advances in fusion design and manufacturing processes have resolved this problem.

More complex routing, or add/drop, can be realized by assembling Mach-Zehnder interferometers in series. For example, a 1x4 de-interleaver designed for a 32-channel WDM system will have eight channels on each output fiber of the device. The initial system could be deployed using one output fiber with just eight channels, and additional sets of transmitters and WDM filters could be added to the unused slicer/interleaver fibers when the bandwidth is required.

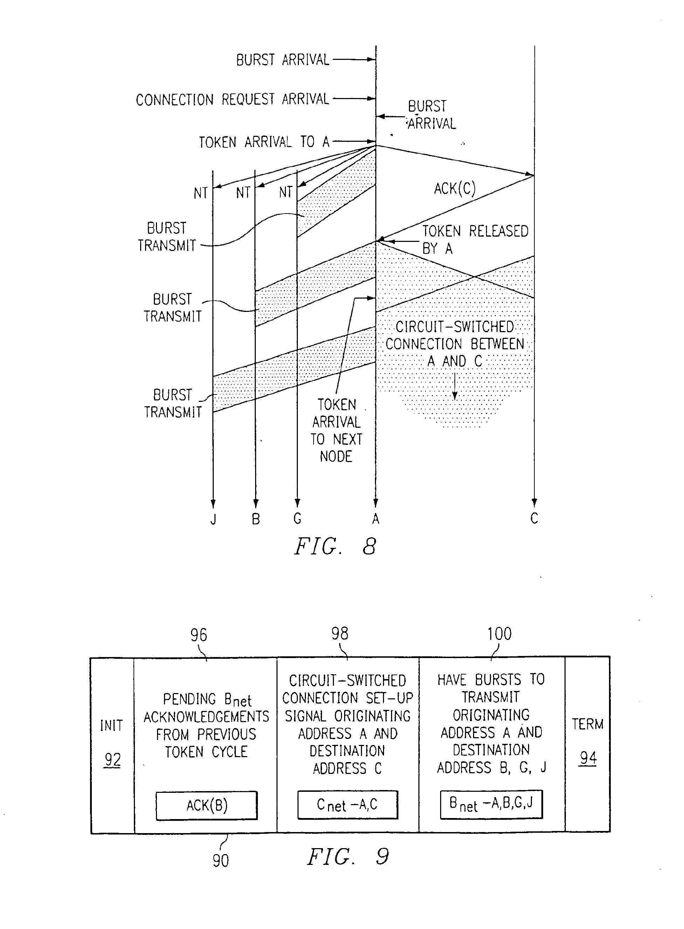

Figure 8 illustrates a typical scenario for the transmission of bursts and the establishment of a circuit-switched connection including signaling and timing considerations. Figure 8 illustrates the control signals from the perspective of a node A, that has received bursts of data for nodes G, B, and J and stored the bursts in buffer 74, and has also received a connection request from node C for a circuit-switched connection. This request is queued in buffer 76 of node A.

When the token arrives at node A, a notification packet (NT) is broadcast from node A into the control channel, which is assumed to be in the form of a symmetric broadcast star, like the transmission medium. The notification packet is received everywhere in the network at approximately the same time.

A notification packet 90 is shown in greater detail in connection with Figure 9. The notification packet includes an initiation field 92 and a termination field 94 that designate the start and finish of the packet 90. A Bnet acknowledgements field 96 is used to acknowledge, on a one by one basis, the reception of bursts, destined to the node, during the previous token cycle. If a sending node does not receive an acknowledgment in this field after a transmission of a burst, it is an indication that the burst must be retransmitted. A Cnet information field 98 contains the outstanding connection set-up information, if any. This field contains the originating address and destination address for a pending request. Acknowledgement of the connection request in the same token cycle is necessary to establish the connection. A third field, the Bnet information field 100, lists the bursts queued for transmission in the current token cycle, if any, along with their originating address and their destination addresses.

The duration of a burst transmission session is determined by the number of the bursts, their length and the bit rate. The duration of the burst session of a node in a particular token cycle should not exceed the duration of an average token cycle. Thus, a threshold is set to satisfy this condition. Whenever a node receives the token, it specifies the bursts to be launched during the current cycle, so as not to exceed this threshold. Any extra burst, or bursts that arrive while a node is holding the token are deferred to the following cycle.

Referring again to Figure 8, following the broadcast of the notification packet 90, node A transmits the specified bursts to nodes G, B and J, successively. All of these transmissions are carried over the distinct burst-transmission wavelength of node A's fixed transmitter (λ_{A_bst}) . On the Cnet side of node A, node C recognizes itself as the destination of a circuit-switched connection responsive to receiving the notification packet 90 and responds to the request of a connection by node A with a acknowledgement signal ACK(C), assuming node C is available. The connection between nodes A and C is established and the two nodes may begin communication over pre-specified channels (λ_{A ct} and λ_{c_ct}). The receiver 70 in each node would tune to the transmission wavelength of the other node upon decoding the connection information in the notification packet 90.

In the event node C is not available, it would not return an acknowledgement, and node A would terminate the connection request after a designated time-out period (to).

The possession of the token by any node, node A in the current case, is tied to the connection establishment process (not to burst transmissions where some burst(s) may remain to be launched after the token is passed over). So, as long as the connection is established the token is passed along by node A to the following node in its cycle. In the cases where the destination node is busy and unable to engage in a connection, the token holding policy defines the proper action. One choice is to deploy lenient token holding policy where node A passes the token along to the following node when "C" is busy. There are a number of trade offs in the choice of a lenient holding policy as opposed to a persistent holding policy. However, in the illustrated architecture, the common control channel (and the very same token) is serving the Bnet also and is not restricted to the Cnet, favoring a lenient holding policy.

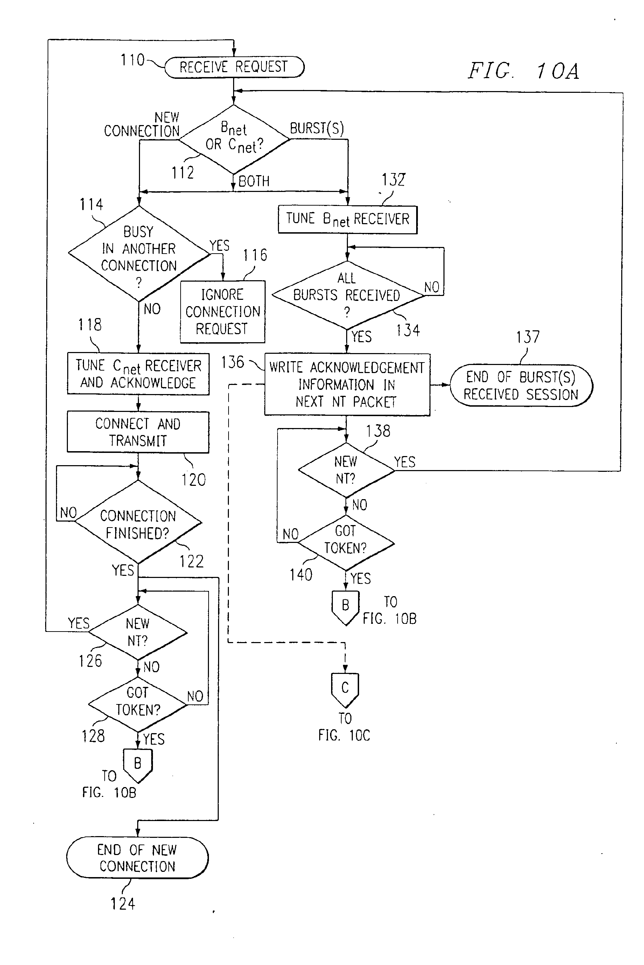

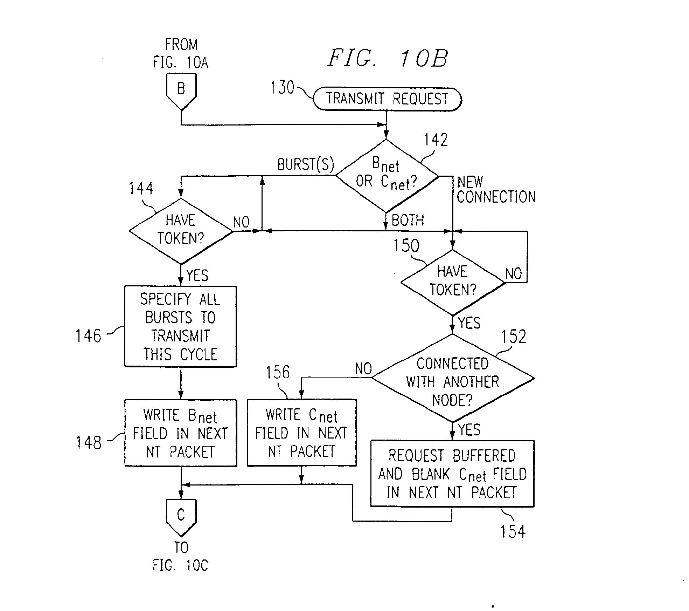

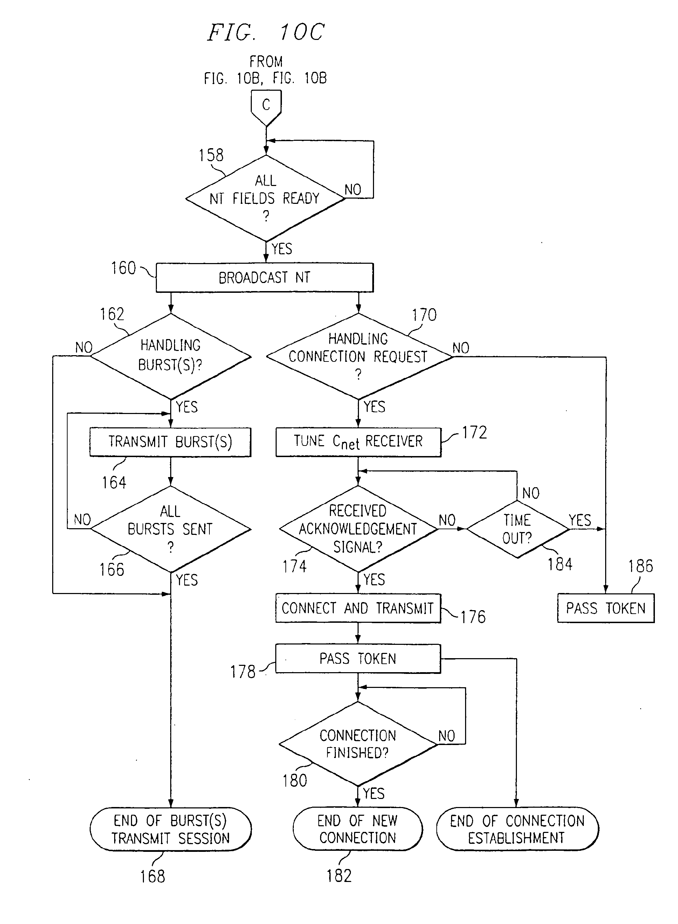

Figures 10A thorough 10C illustrate a flow diagram describing a combined, common control, Bnet/Cnet protocol for managing communications over a network 40, which could be implemented in control circuitry 80. In block 110, one or more receive requests is received (a Bnet request, a Cnet request or both). If one of the requests is a Cnet request in decision block 112, then it is determined whether the node 44 is currently busy with another circuit-switched connection in decision block 114. If busy, the connection request is ignored (no acknowledgement returned) in block 116. If not busy, then the receiver 70 is tuned to the channel associated with the requesting node in block 118 and an acknowledgement is sent. In block 120, the connection is established and transmission can begin.

In decision block 122, the end of the connection is detected. Once detected, the connection is terminated in block 124 and there is a check for new notification packets in decision block 126. If there is a new notification packet, control returns to block 110 for receive requests.

If there is no new notification packet in block 126, decision block 128 determines whether the node has control of the token. If not, the system loops between blocks 126 and 128 until either a new notification packet or the token arrives. If the token arrives in block 128, control is passed to the transmit block 130.

Returning to decision block 112, if one of the requests is a Bnet receive request, then the receiver 64 is tuned to the requesting node's channel in block 132 and burst are received over this channel. Decision block 134 determines when all bursts have been received. When the burst transmission is completed, an acknowledgement is written into field 96 of the next notification packet to be sent by the node in block 136 and the burst session is terminated in block 137.

Decision blocks 138 and 140 determine the reception of either a new notification packet (block 138) or the token (block 140). When a new notification packet is received in block 138, control returns to block 110. If the token is received in block 140, control is passed to the transmit request block 130.

For a transmit request in block 130, either a Cnet request, Bnet request or both could be pending in decision block 142. If one of the transmit requests is a Bnet request, the node determines whether it has control of the token in block 144. Once the token is received, the burst(s) to be transmitted are specified in block 146 and this information is written into field 100 of the next notification packet in block 148.

Returning to block 142, if one of the transmit requests is a Cnet request, the node determines whether it has control of the token in block 150. If the node has control of the token, it determines whether it has a current circuit-switched connection in block 152. If so, the request is buffered and a blank Cnet field 98 is specified in block 154. Otherwise, the connection information is written to the Cnet field 98 in block 156.

When all fields of the notification packet to be written are complete in decision block 158, the notification packet is sent in block 160. If burst are being handled in block 162, then the bursts are transmitted in block 164 until all bursts are sent in decision block 166. Once all bursts are sent, the burst session is ended in block 168.

At the same time, if circuit-switch connections are being handled (decision block 170), the receiver 70 is tuned to the channel associated with the connecting node in block 172 and once the acknowledgement is received in block 174, a connection is established in block 176 and transmission may begin. After the connection is established the token is passed in block 178. When the connection is finished in decision block 180, the connection is terminated in block 182.

If an acknowledgement is not received in block 174 prior to a time-out in decision block 184, or if the node does not have any current connection requests in block 170, then the token is passed in block 186.

The present invention provides significant advantages over the prior art. The nodes combine the qualities of optical circuit (wavelength) switching and optical burst switching, allowing the most efficient switching method to be used for a given transfer. The architecture permits the treatment of circuits and bursts separately, each in a sub-network that is optimized for carrying its designated type of traffic (bursts or circuits). A common control platform manages the communications for both types of traffic.

Additionally, the invention provides an entry strategy for burst-switching as a new switching technique. While current studies envision burst-switching in the core network, where it is actually difficult to introduce (due to interface with numerous core protocols and systems including IP, ATM and SONET plus ultra-high cost to do so), the introduction of burst-switching at the access level can improve the performance of the public network at this level (higher efficiency and relief of bottlenecks) and, meanwhile, can get around the complex interfacing requirements in the core. At the metropolitan/regional network, bursts may be mapped into SONET circuits and merge smoothly with the main stream up to the core where extra bandwidth is made available today and advanced traffic management is made possible via the advents of OADM's (optical add/drop multiplexers) and OXC's (optical cross-connects).

An important added advantage of the solution is the deployment of a passive technology (optical interleaving/slicing) in the mux/demux stage of this particular node architecture for separation of two different types of traffic, leading to simplification in the optical part of the nodes and cost reduction.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. An optical network node for receiving information over a plurality of channels on respective wavelengths from an input optical fiber, comprising:separating circuitry for separating the optical signal into a first set of channels and a second set of channels; circuit-switching circuitry for switching information in the first set of channels; burst-switching circuitry for routing information in the second set of channels;control circuitry for managing communications over said circuit-switching circuitry and said burst switching circuitry; and combining circuitry for multiplexing the first and second sets of channels onto an output optical fiber.

2. The optical network node of claim 1 wherein said circuit-switching circuitry includes circuitry for transmitting over a predetermined one said first set of channels.

3. The optical network node of claim 2 wherein said circuit-switching circuitry includes circuitry for receiving from a selected one of said first set of channels.

4. The optical network node of claim 1 wherein said burst-switching circuitry includes circuitry for transmitting bursts over a predetermined one said first set of channels.

5. The optical network node of claim 1 wherein said burst-switching circuitry includes circuitry for receiving from a selected one of said first set of channels.

6. A method for receiving information over a plurality of channels on respective wavelengths from an input optical fiber, comprising: separating the optical signal into a first set of channels and a second set of channels; circuit-switching information in the first set of channels; routing bursts in the second set of channels; managing communications over the first and second sets of channels using common control circuitry; and multiplexing the first and second sets of channels onto an output optical fiber.

7. The method of claim 6 wherein the circuit-switching step includes the step of transmitting over a predetermined one said first set of channels.

8. The method of claim 7 wherein the circuit-switching step includes the step of receiving from a selected one of said first set of channels.

9. The method of claim 6 wherein the routing step includes the step of transmitting bursts over a predetermined one said first set of channels.

10. The method of claim 6 wherein the routing step includes the step of receiving bursts from a selected one of said first set of channels.
